# EUROPÄISCHE PATENTANMELDUNG

(11) **EP 1 500 612 A1**
(43) Veröffentlichungstag der Anmeldung: **26.01.2005**
(21) Anmeldenummer: 04017144.9
(22) Anmeldetag: 20.07.2004
(51) Int. Cl.: B65F 1/00, A47J 31/40

(54) **Tresterbehälter**

(30) Priorität: 22.07.2003 DE 20311272 U
(71) Anmelder: DJG - Dr. Jung Gruppe GmbH, 82152 Planegg (DE); Helfrich, Rainer, Dipl.-Ing., 82166 Gräfelfing (DE)
(72) Erfinder: Helfrich, Rainer, Dipl.-Ing., 82153 Gräfelfing (DE)
(74) Vertreter: Tetzner, Michael, Dipl.-Ing.

(57) **Zusammenfassung**

Die Erfindung betrifft einen Tresterbehälter für eine Kaffeemaschine, wobei der Behälter eine Einlage aus saugfähigem Material zum Aufnehmen der im Kaffeesatz enthaltenen Feuchtigkeit aufweist.

## Beschreibung

Die Erfindung betrifft einen Tresterbehälter für eine Kaffeemaschine.

Hochwertige Kaffee- oder Espressomaschinen sind inzwischen auch in Privathaushalten sehr beliebt. Für den Kaffeesatz weisen derartige Maschinen meist einen sogenannten Trester- oder Kaffeesatzbehälter auf. Kaffeesatz wird nach dem Brühvorgang in diesem Behälter geben, setzt sich ab und verklebt dort durch die vorhandene Feuchtigkeit. Verbleibt der Kaffeesatz zu lange in diesem Behälter kommt es zur Schimmelbildung, wodurch die Reinigung noch zeitaufwendiger ausfällt.

Dieses Problem ist den Maschinenherstellem bekannt. Sie empfehlen daher die tägliche Entsorgung verbleibender Rückstände und die Reinigung des Tresterbehälters. Wird die tägliche Reinigung jedoch vergessen, kann sich der Schimmel auf die gesamte Maschine ausbreiten. Dies hat zur Folge, dass eine normale Reinigung nicht mehr ausreicht und die komplette Maschine teuer gewartet werden muss.

Der Erfindung liegt daher die Aufgabe zugrunde, eine Möglichkeit zu schaffen, durch die die Schimmelbildung verhindert und die Entsorgung des Kaffeesatzes erleichtert wird.

Erfindungsgemäß wird diese Aufgabe durch die Merkmale des Anspruches 1 gelöst, indem der Tresterbehälter für eine Kaffeemaschine eine Einlage aus saugfähigem Material zum Aufnehmen der im Kaffeesatz enthaltenen Flüssigkeit aufweist. Durch diese Maßnahme kann die Schimmelbildung weitgehend verhindert werden. Wird die Einlage zusammen mit dem Kaffeesatz entsorgt, ergibt sich eine besonders einfache und schnelle Reinigung.

Ein weiterer Vorteil besteht auch darin, dass der Tresterbehälter insgesamt größer gestaltet werden kann, da mit der erfindungsgemäßen Einlage die Schimmelbildung weitgehend verhindert wird und dadurch eine Reinigung nur noch in größeren Abständen erforderlich ist.

Weitere Ausgestaltungen der Erfindung sind Gegenstand der Unteransprüche.

Gemäß einer besonderen Ausgestaltung der Erfindung wird die Einlage aus einem ebenen Materialzuschnitt gefaltet, wobei zweckmäßigerweise Perforationslinien oder dgl. die Faltkanten vorgeben.

In einer speziellen Ausgestaltung wird die Einlage nach Art einer Tüte ausgebildet, wobei die Einlage Tragelemente, wie Griffe, aufweisen kann. Gemäß einem weiteren Ausführungsbeispiel ist die Einlage derart ausgestaltet und angeordnet, dass wenigstens ein Hohlraum zwischen Einlage und Behälter entsteht. Dadurch wird die Trocknung der Einlage begünstigt und eine Schimmelbildung verhindert.

Weitere Ausgestaltungen und Vorteile der Erfindung werden im Folgenden anhand der Beschreibung einiger Ausführungsbeispiele und der Zeichnung näher erläutert.

In der Zeichnung zeigen
- Fig. 1: eine schematische Darstellung einer Einlage, die den Tresterbehälter komplett auskleidet,
- Fig. 2: eine schematische Darstellung einer Einlage, die den Tresterbehälter zum Teil auskleidet,
- Fig. 3: eine schematische Darstellung einer Einlage mit schrägen Wänden,
- Fig. 4: eine schematische Darstellung einer Einlage mit schrägen und unterschiedlich hohen Seitenwänden,
- Fig. 5: eine schematische Darstellung einer Einlage mit Einhängelasche und unterschiedlich hohen Seitenwänden,
- Fig. 6: eine schematische Darstellung einer Einlage mit drei Seitenwänden und einer Einhängelasche,
- Fig. 7: eine schematische Darstellung einer Einlage mit Zusatzeinlage,
- Fig. 8: eine schematische Darstellung einer Einlage mit pyramidenähnlichem Boden gemäß einem ersten Ausführungsbeispiel,
- Fig. 9: eine schematische Darstellung einer Einlage mit einem pyramidenähnlichem Boden gemäß einem zweiten Ausführungsbeispiel,
- Fig. 10: eine schematische Darstellung einer Einlage mit einem pyramidenähnlichem Boden gemäß einem dritten Ausführungsbeispiel,
- Fig. 11: eine schematische Darstellung einer Einlage mit vier Einhängelaschen,
- Fig. 12-15: schematische Darstellungen von Einlagen mit unterschiedlichen Tragelementen in Form von Griffen,
- Fig. 16: eine schematische Darstellung eines ebenen Materialszuschnitts für eine Einlage,
- Fig. 17: eine schematische Darstellung der gefalteten Einlage gemäß Fig. 16,
- Fig. 18: eine schematische Darstellung eines ebenen Materialszuschnitts gemäß einem zweiten Ausführungsbeispiel und
- Fig. 19: eine schematische Darstellung eines ebenen Materialszuschnitts gemäß einem dritten Ausführungsbeispiel.

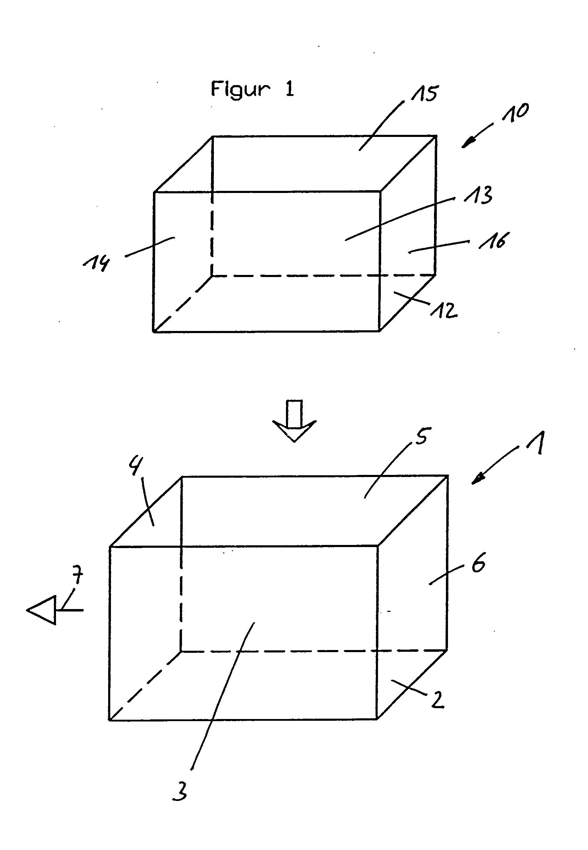

Der in Fig. 1 dargestellte Tresterbehälter 1 weist einen Boden 2 sowie Seitenwände 3-6 auf.

Der Tresterbehälter 1 wird in Richtung des Pfeils 7 in den dafür vorgesehenen Bereich einer Kaffeemaschine eingeschoben.

Zuvor wird der Tresterbehälter jedoch mit einer Einlage 10 aus saugfähigem Material zum Aufnehmen der im Kaffeesatz enthaltenen Feuchtigkeit bestückt. Im dargestellten Ausführungsbeispiel besteht die Einlage 10 ebenfalls aus einem Boden 12 sowie Seitenwänden 13-16, wobei die Höhe der Einlage 10 etwa der Höhe des Tresterbehälters 1 entspricht, so dass die Einlage 10 den Tresterbehälter 1 komplett auskleidet.

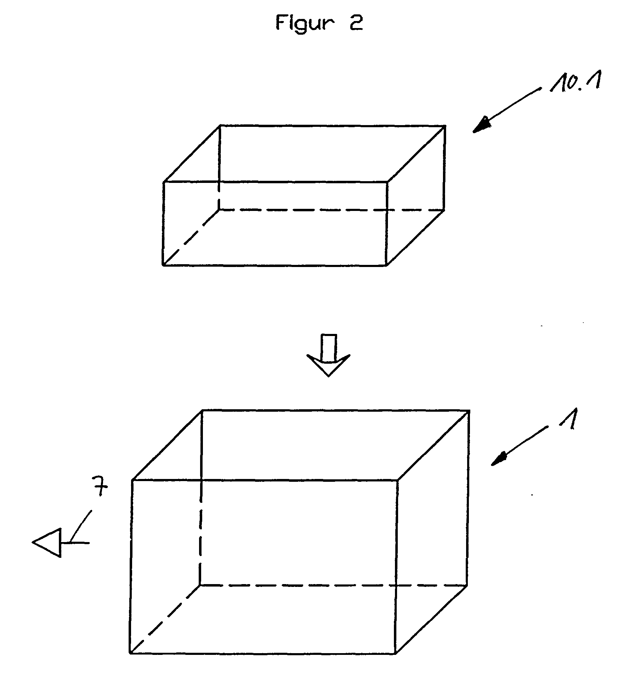

Bei der in Fig. 2 gezeigten Variante weist die Einlage 10.1 eine geringere Höhe auf, so dass der Tresterbehälter 1 nur zum Teil ausgekleidet wird.

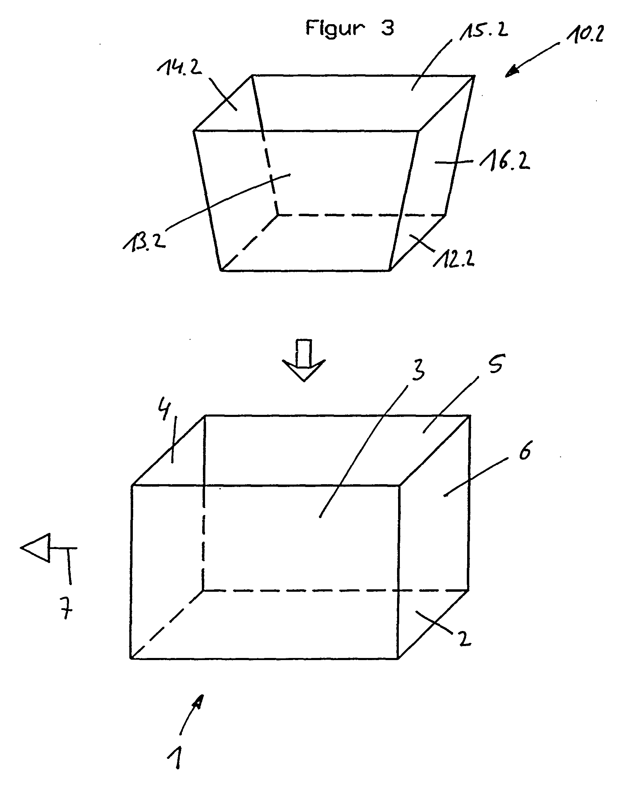

Während die Seitenwände der Einlage gemäß Fig. 1 und 2 senkrecht zum Boden ausgerichtet sind, ist die Einlage 10.2 gemäß Fig. 3 mit schrägen Wänden ausgebildet, so dass sich die Einlage 10.2 nach unten verjüngt. Hierdurch entstehen zwischen den Seitenwänden 3-6 des Tresterbehälters 1 und den Seitenwänden 13.2-16.2 der Einlage 10.2 Hohlräume, so dass die Einlage nicht unmittelbar an den Seitenwänden des Tresterbehälters anliegt. Diese Konstruktion verhindert eine Verschmutzung des Tresterbehälters 1 und ermöglicht zudem eine bessere Trocknung der Einlage.

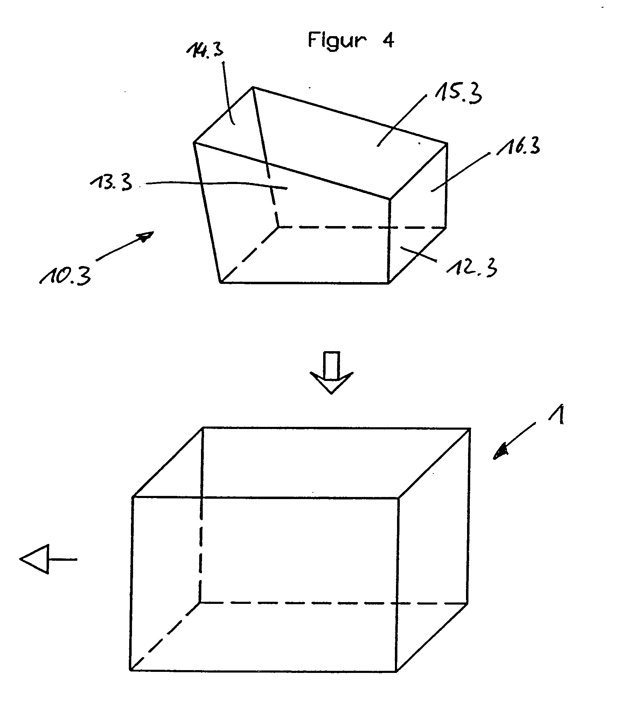

In Fig. 4 ist eine Einlage 10.3 gezeigt, die sich von der Einlage 10.2 dadurch unterscheidet, dass die Höhe der Seitenwand 16.3 geringer als die Höhe der gegenüberliegenden Seitenwand 14.3 ist.

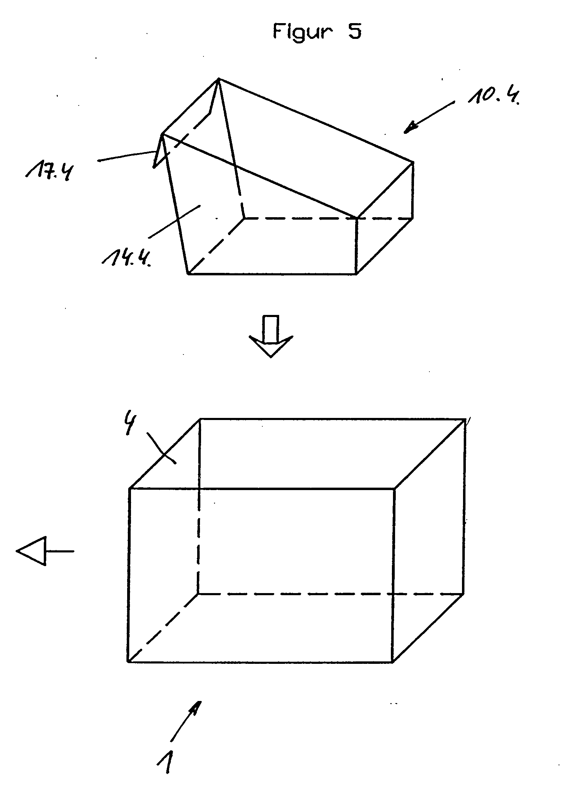

Fig. 5 zeigt eine Weiterbildung der Einlage gemäß Fig. 4. Die Einlage 10.4 weist an der höheren Seitenwand 14.4 eine Einhängelasche 17.4 auf, mit der sie an der oberen Kante der Seitenwand 4 des Tresterbehälters 1 eingehängt werden kann. Durch diese Maßnahme wird ein ungewolltes Abrutschen der Einlage vermieden.

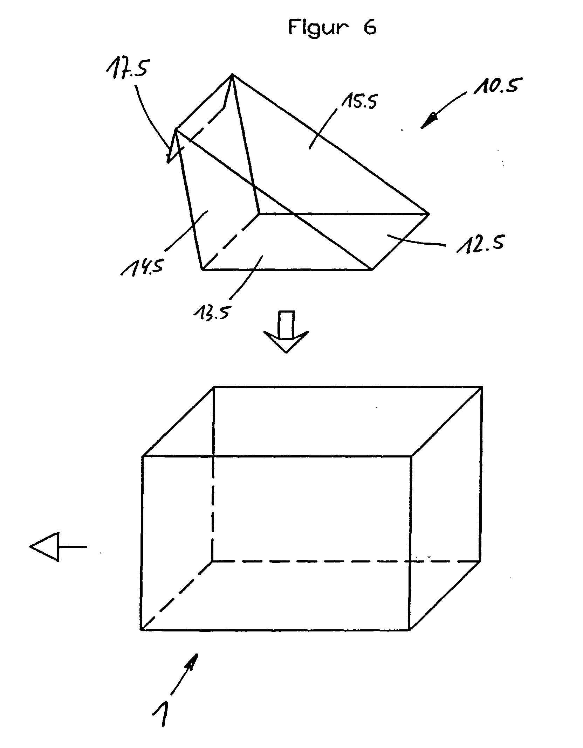

Die Einlage 10.5 gemäß Fig. 6 sieht ebenfalls eine Einhängelasche 17.5 vor. Sie weist ansonsten jedoch nur drei Seitenwände 13.5 bis 15.5 auf. Die Seitenwände 13.5 und 15.5 sind daher dreieckförmig ausgebildet.

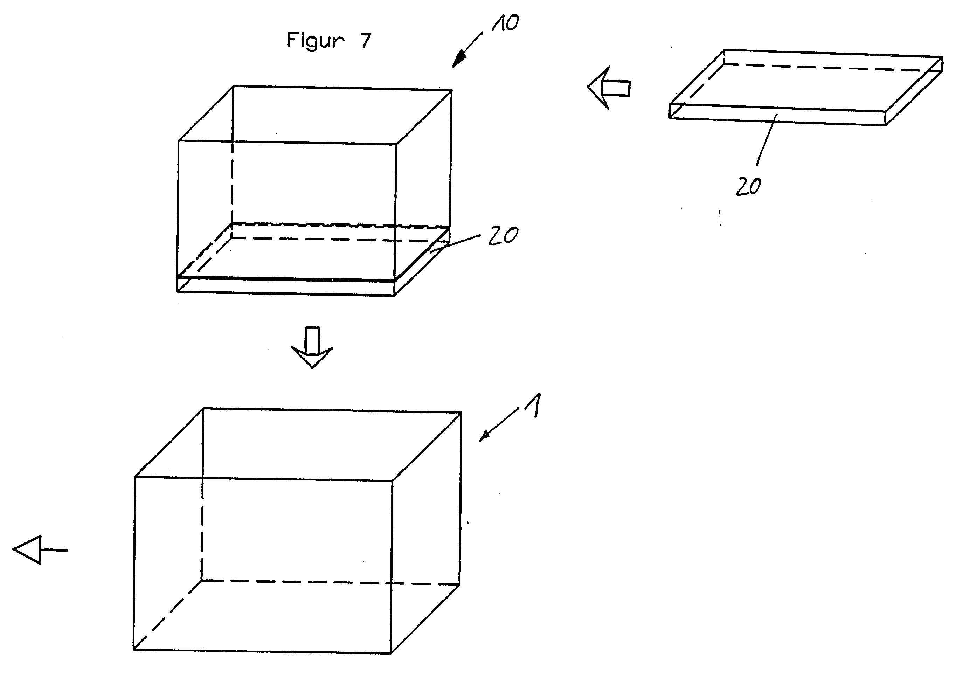

Das Ausführungsbeispiel gemäß Fig. 7 entspricht im Wesentlichen der in Fig. 1 gezeigten Variante. Die Einlage 10 weist jedoch noch eine weitere, saugfähige Zusatzeinlage 20 auf, die in die Einlage 10 eingelegt wird, um die Aufnahmefähigkeit für die im Kaffeesatz befindliche Flüssigkeit zu erhöhen.

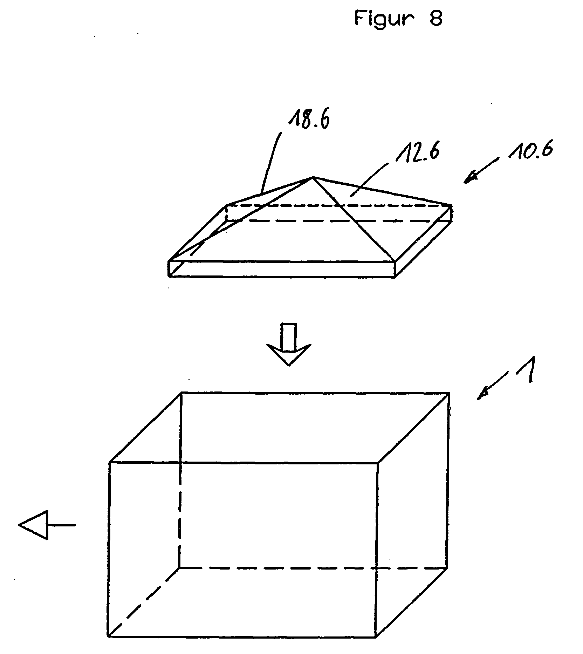

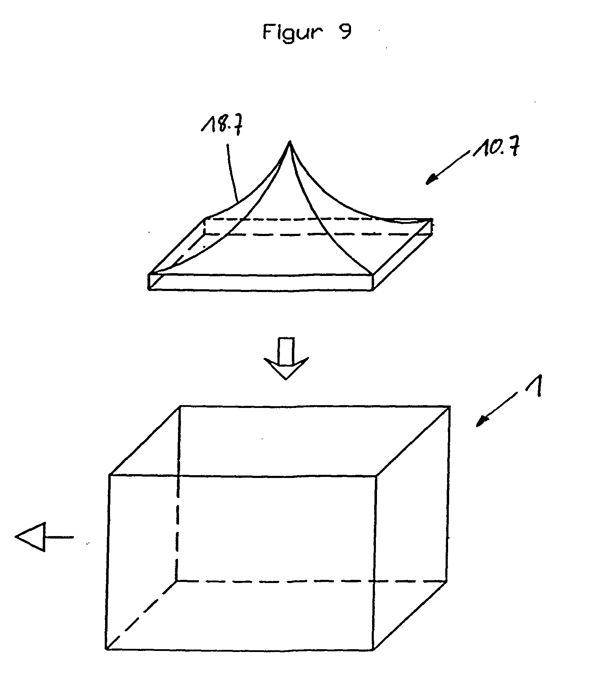

Die Einlage 10.6 gemäß Fig. 8 wird durch einen Einlageboden 12.6 gebildet, der pyramidenähnlich ausgebildet ist. Die Kanten 18.6 der Pyramide sind linear, während das Ausführungsbeispiel gemäß Fig. 9 eine Einlage 10.7 mit gekrümmten Pyramidenkanten 18.7 zeigt.

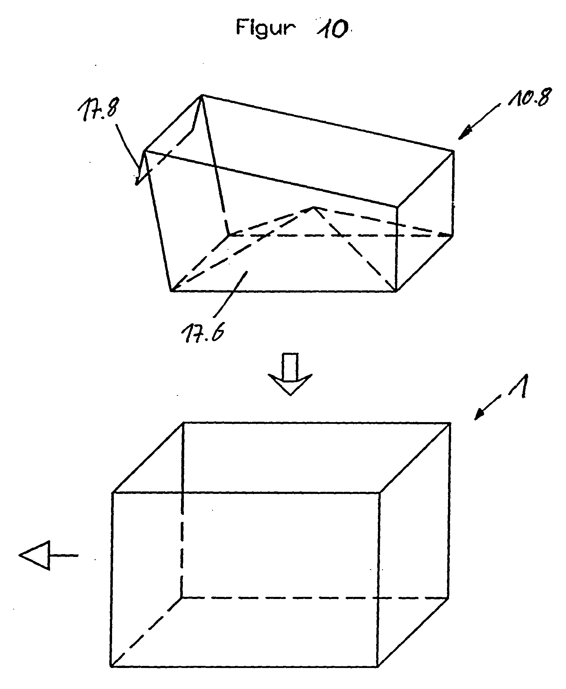

Die Einlage 10.8 gemäß Fig. 10 stellt eine Kombination der Einlage 10.4 gemäß Fig. 5 mit einem pyramidenähnlichen Boden 17.6 gemäß Fig. 8 dar.

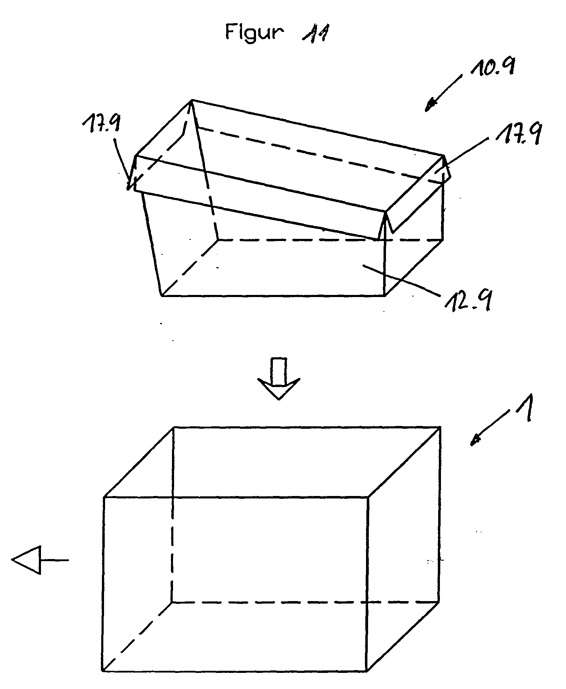

Im Rahmen der Erfindung ist es selbstverständlich auch denkbar, dass mehrere Einhängelaschen vorgesehen ist. Die Einlage 10.9 gemäß Fig. 11 zeigt dementsprechend an allen vier Seitenwänden Einhängelaschen 17.9. Sind die Höhen zweier Seitenwände, wie im dargestellten Ausführungsbeispiel, unterschiedlich hoch ausgebildet, ist der Boden 12.9 der Einlage 10.9 schräg zum Boden 2 des Tresterbehälters 1 ausgerichtet.

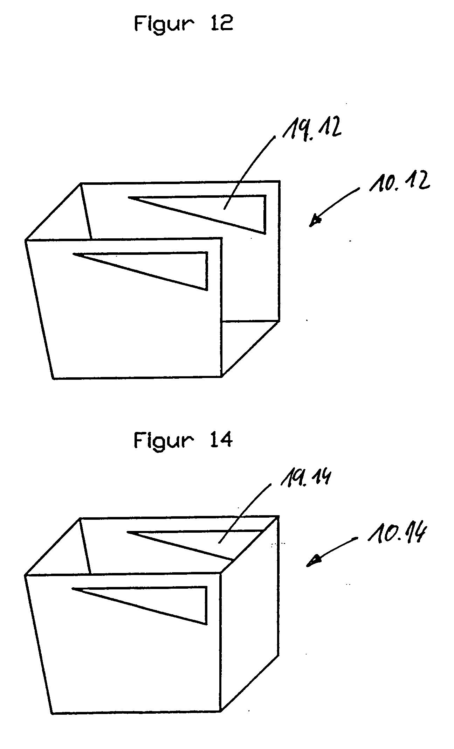

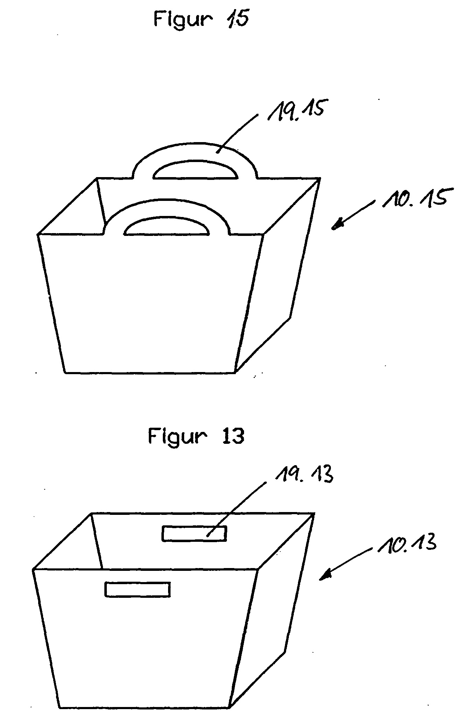

Die Fig. 12 bis 15 zeigen verschiedene Einlagen 10.12 bis 10.15 mit als Griffe ausgebildeten Tragelementen 19.12 bis 19.15, die das Entnehmen der mit Kaffeesatz gefüllten Einlage erleichtern sollen. Die Tragelemente können dabei als Aussparungen (19.12 bis 19.14) in zwei Seitenwänden oder griffartig (19.15) ausgebildet werden.

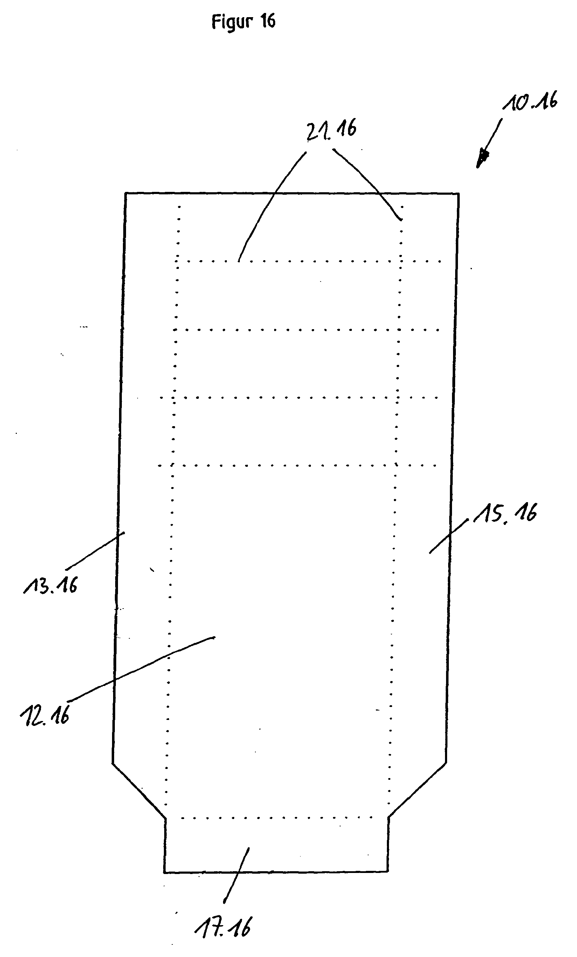

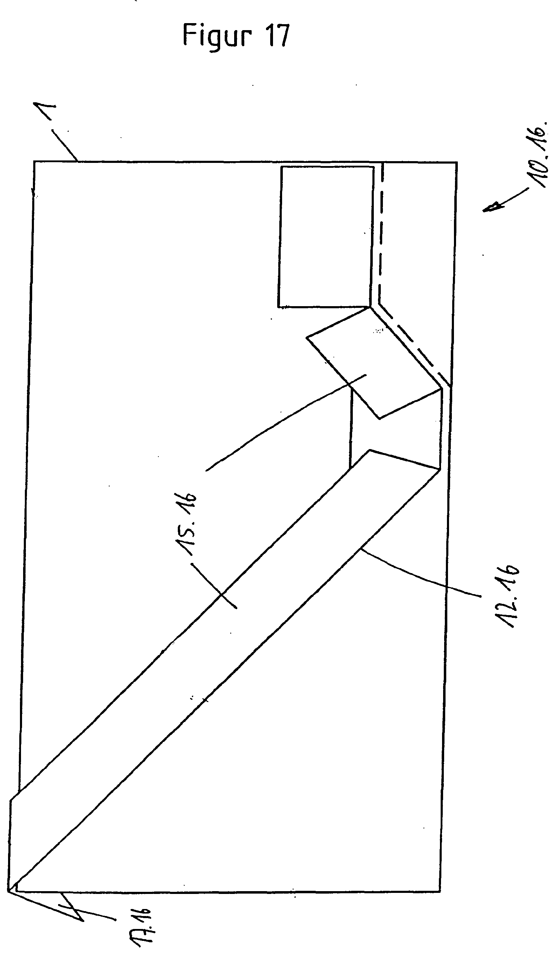

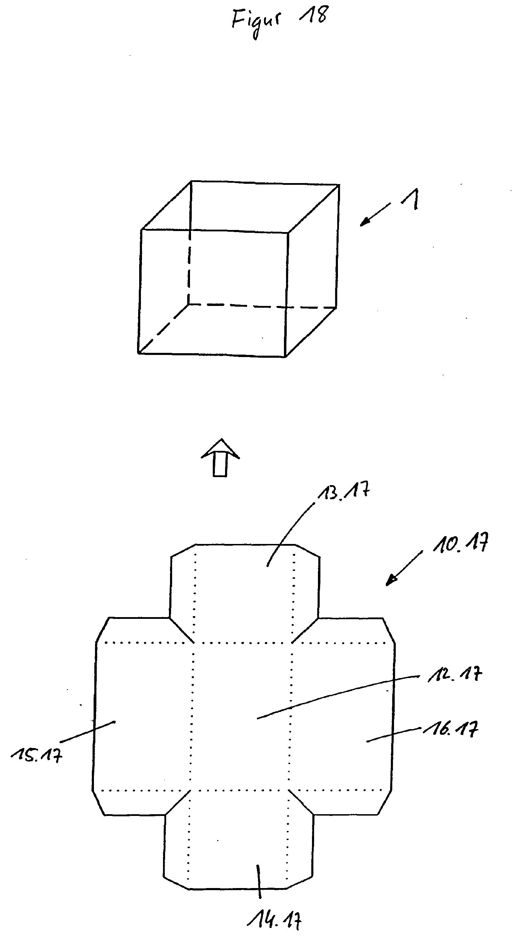

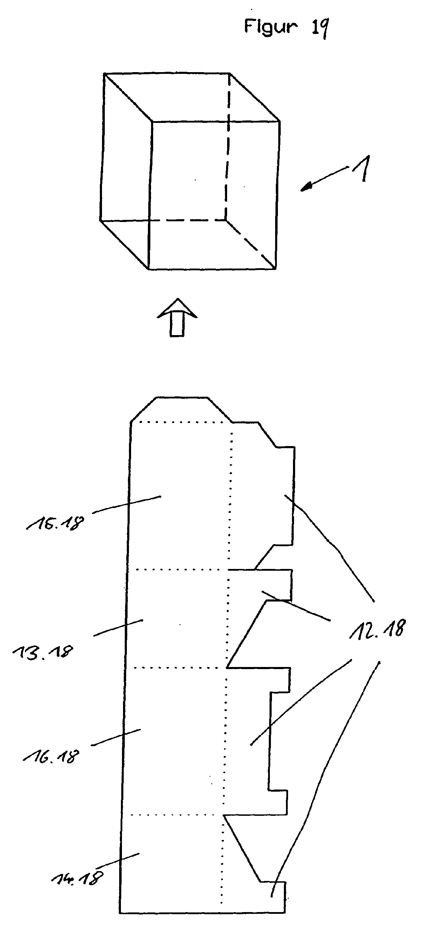

Die Einlagen werden bevorzugt aus einem ebenen Materialzuschnitt gefertigt. In Fig. 16 ist ein entsprechender Materialzuschnitt für die in Fig. 17 gezeigte Einlage 10.16 dargestellt. Perforationslinien 21.16 erleichtern dabei die Herstellung der richtigen Form, wobei Boden 12.16, Seitenwände 13.16, 15.16 sowie die Einhängelasche 17.16 gebildet werden. Um die Verwendung der Einlagen für verschiedene Behältergrößen und -typen zu gewährleisten , können zusätzliche Perforationslinien in der Einlage angeordnet werden.

Die Einlage 10.17 gemäß Fig. 18 wird ebenfalls aus einem ebenen Materialzuschnitt gebildet, wobei es im Bereich der Seitenflächen (13.17 bis 16.17) zu Überlappungen kommt.

Der Materialzuschnitt gemäß Fig. 19 ist so ausgestaltet, dass die Überlappungen im Bereich des Bodens 12.18 vorgesehen sind. Dadurch wird die Saugfähigkeit genau dort erhöht, wo sie besonders erforderlich ist.

Als saugfähiges Material für die Einlagen kommen prinzipiell künstliche oder natürliche Materialien in Betracht, wie Papier, Löschpapier, Karton, Schwamm, Vlies, Watte und oder Textilien, sowie Materialien aus pflanzlicher Stärke. Hierbei wird insbesondere biologisch abbaubares Material bevorzugt.

Es kommen auch Materialien in Betracht, die durch Beschichtung, Benetzung, Tränkung und/oder Bedampfung der Einlage mit Absorptionsmitteln veredelt wurden. Es ist außerdem denkbar, die Einlage mit einem saurem Medium zu behandeln, da die Schimmelbildung im sauren Umfeld behindert wird.

Neben der in einigen Ausführungsbeispielen beschriebenen Einhängelasche können natürlich auch andere Befestigungsmöglichkeiten, wie Klemmelemente vorgesehen werden. Vorteilhafterweise wird die Einlage jedoch so ausgebildet und fixiert, dass sie durch Umdrehen des Tresterbehälters leicht herausfällt oder mit einem Handgriff entfernt werden kann.

## Patentansprüche

1. Tresterbehälter (1) für eine Kaffeemaschine, **dadurch gekennzeichnet, dass** der Behälter eine Einlage (10) aus saugfähigem Material zum Aufnehmen der im Kaffeesatz enthaltenen Feuchtigkeit aufweist.

2. Tresterbehälter nach Anspruch 1, **dadurch gekennzeichnet, dass** die Einlage aus einem ebenen Materialzuschnitt (10.16, 10.17, 10.18) gefaltet ist.

3. Tresterbehälter nach einem oder mehreren der vorhergehenden Ansprüche, **dadurch gekennzeichnet, dass** die Einlage (10.12, 10.13, 10.14, 10.15) nach Art einer Tüte ausgebildet ist.

4. Tresterbehälter nach einem oder mehreren der vorhergehenden Ansprüche, **dadurch gekennzeichnet, dass** die Einlage (10.4) an wenigstens einem Randbereich des Tresterbehälters (1) befestigbar ist.

5. Tresterbehälter nach einem oder mehreren der vorhergehenden Ansprüche, **dadurch gekennzeichnet, dass** die Einlage (10) einen Boden (2) und/oder wenigstens eine Wand (3, 4, 5, 6) des Behälters zumindest teilweise auskleidet.

6. Tresterbehälter nach einem oder mehreren der vorhergehenden Ansprüche, **dadurch gekennzeichnet, dass** die Einlage (10.6, 19.7) am Boden des Behälters angeordnet ist und eine pyramidenähnlich Form aufweist.

7. Tresterbehälter nach einem oder mehreren der vorhergehenden Ansprüche, **dadurch gekennzeichnet, dass** die Einlage (10) aus biologisch abbaubarem Material besteht.

8. Tresterbehälter nach einem oder mehreren der vorhergehenden Ansprüche, **dadurch gekennzeichnet, dass** die Einlage (10) mit einem saurem Medium behandelt ist.

9. Tresterbehälter nach einem oder mehreren der vorhergehenden Ansprüche, **dadurch gekennzeichnet, dass** die Einlage (10.15) Tragelemente (19.15), insbesondere Griffe, aufweist.

10. Tresterbehälter nach einem oder mehreren der vorhergehenden Ansprüche, **dadurch gekennzeichnet, dass** die Einlage (10.16, 10.17, 10.18) aus einem ebenen Materialzuschnitt gefaltet ist, wobei Perforationslinien (21.16) oder dgl. die Faltkanten vorgeben.

11. Tresterbehälter nach einem oder mehreren der vorhergehenden Ansprüche, **dadurch gekennzeichnet, dass** die Einlage (10.4) Fixierungsmittel (17.4) aufweist, um die Einlage am Behälter zu befestigen.

12. Tresterbehälter nach einem oder mehreren der vorhergehenden Ansprüche, **dadurch gekennzeichnet, dass** die Einlage (10) bedruckbar ist.

13. Tresterbehälter nach einem oder mehreren der vorhergehenden Ansprüche, **dadurch gekennzeichnet, dass** in der Einlage (10) eine Zusatzeinlage (20) vorgesehen ist, um die Saugfähigkeit zu erhöhen.

14. Tresterbehälter nach einem oder mehreren der vorhergehenden Ansprüche, **dadurch gekennzeichnet, dass** die Einlage (10.2) wenigstens eine Wand des Behälters (1) bedeckt, wobei die Einlage schräg zu dieser Behälterwand angeordnet ist.

15. Tresterbehälter nach einem oder mehreren der vorhergehenden Ansprüche, **dadurch gekennzeichnet, dass** die Einlage (10.2) derart ausgestaltet und angeordnet ist, dass wenigstens ein Hohlraum zwischen Einlage und Behälter entsteht.
